# EUROPÄISCHE PATENTANMELDUNG

(11) **EP 2 568 587 A1**
(43) Veröffentlichungstag der Anmeldung: **13.03.2013**
(21) Anmeldenummer: 11180203.9
(22) Anmeldetag: 06.09.2011
(51) Int. Cl.: H02M 1/12, H02H 9/02

(54) **Netzfilter für einen Umrichter und Umrichter mit einem solchen Netzfilter**

(71) Anmelder: Siemens Aktiengesellschaft, 80333 München (DE)
(72) Erfinder: Göpfrich, Kurt, 91058 Erlangen (DE)

(57) **Zusammenfassung**

Die Erfindung betrifft einen Netzfilter (22) für einen Umrichter (10), wobei der Netzfilter (22) für jeweils eine Phase des Umrichters (10) jeweils einen Filterzweig (30,32,34) mit jeweils zumindest einer LC-Serienschaltung (L11,C11; L21, C21; L31, C31) aufweist und zumindest eine Ansteuerschaltung (40,41,42) sowie ein durch die mindestens eine Ansteuerschaltung (40,41,42) ansteuerbares Schaltelement (V11, V21, V31; S11, S21, S31) zur Aktivierung oder Deaktivierung des Filterzweigs (30,32,34) in Abhängigkeit von einer durch die Ansteuerschaltung (40,41,42) überwachbaren Schaltbedingung umfasst.

## Beschreibung

Die Erfindung betrifft einen Netzfilter für einen Umrichter und einen Umrichter mit einem solchen Netzfilter. Umrichter mit einem niedrig dimensionierten Zwischenkreis sowie rückspeisefähige Umrichter mit aktiver Einspeisung erzeugen pulsfrequente Netzrückwirkungen, die sich manchmal störend bemerkbar machen (pulsfrequente Störungen). Pulsfrequente Netzrückwirkungen sind Verzerrungen der Netzspannung im Bereich weniger Volt, die von der Pulsfrequenz des Umrichters und deren Vielfachen abhängen. Umrichter mit einer Pulsfrequenz von beispielsweise 4kHz haben störende Spektralanteile bei 4, 8, 12, usw. kHz.

Umrichter der eingangs genannten Art sind bekannt. Bekannt sind auch bestimmte Filter zur Verhinderung oder zumindest Verringerung solcher pulsfrequenter Netzrückwirkungen. Für Umrichter mit aktiver Einspeisung, also sogenannte ALM-Umrichter (ALM = Active Line Module) wurden sogenannte Grundentstörfilter entwickelt. Deren Grenzfrequenz liegt deutlich unterhalb der jeweiligen Pulsfrequenz. Bei Pulsfrequenzen von z.B. 4kHz liegt beispielsweise die Grenzfrequenz solcher Grundentstörfilter bei 1,5kHz. Dadurch wird diese Lösung sehr teuer. Zudem sind die benötigten Bauelemente groß und schwer. Schließlich müssen diese Grundentstörfilter immer speziell für genau ein ALM entwickelt werden. Im Betrieb solcher Grundentstörfilter wird die Leistung über den Filter geführt, wodurch ein- und ausgangsseitig große Anschlussblöcke erforderlich werden.

Eine Aufgabe der Erfindung besteht darin, einen Netzfilter für einen Umrichter und einen Umrichter mit einem solchen Netzfilter anzugeben, bei dem die oben skizzierten Nachteile vermieden werden oder zumindest deren Auswirkungen reduziert sind.

Diese Aufgabe wird erfindungsgemäß mit den Merkmalen des Anspruchs 1 gelöst. Dazu ist bei einem Netzfilter für einen Umrichter vorgesehen, dass der Netzfilter für jeweils eine Phase des Umrichters jeweils einen Filterzweig mit jeweils zumindest einer LC-Serienschaltung aufweist und zumindest eine Ansteuerschaltung sowie ein durch die mindestens eine Ansteuerschaltung ansteuerbares Schaltelement zur Aktivierung oder Deaktivierung des Filterzweigs in Abhängigkeit von einer durch die Ansteuerschaltung überwachbaren Schaltbedingung umfasst.

Der Vorteil der Erfindung besteht vor allem in der universellen Einsetzbarkeit des Netzfilters. Zudem kann durch die Auswahl der Bauelemente der mindestens einen LC-Serienschaltung die jeweils erforderliche Filterfrequenz bedarfsgerecht festgelegt werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform des Netzfilters ist vorgesehen, dass dieser zumindest eine weitere LC-Serienschaltung in jedem Filterzweig elektrisch parallel zu der zumindest einen LC-Serienschaltung des jeweiligen Filterzweigs aufweist. Neben der durch die in jedem Filterzweig in jedem Fall vorhandene LC-Serienschaltung festgelegten Filterfrequenz (erste Filterfrequenz) lassen sich durch Hinzufügung weiterer LC-Serienschaltungen weitere Filterfrequenzen festlegen, so dass auf diese Weise auch Oberschwingungen der pulsfrequenten Störungen von dem Netzfilter erfasst werden können. Bei einer bevorzugten Ausführung dieser Variante ist mindestens eine weitere LC-Serienschaltung vorgesehen. Grundsätzlich können auch zwei, drei, vier, usw. weitere LC-Serienschaltungen vorgesehen sein.

Bei einer Ausführungsform umfasst der Netzfilter einen Messwiderstand zur Überwachung der Schaltbedingung, insbesondere einen Messwiderstand in jedem Filterzweig. Über den oder die Messwiderstände können die dem Netzfilter zugeführten Phasenströme erfasst werden, so dass bei Überschreiten bestimmter Grenzen eine Deaktivierung des jeweiligen Filterzweigs oder aller Filterzweige erfolgen kann. Als Schaltelement zur Aktivierung oder Deaktivierung eines Filterzweigs kommt dabei ein in Abhängigkeit von der Schaltbedingung ansteuerbarer Transistor oder jedes sonstige elektronische Schaltelement in Betracht. Ein Transistor oder dergleichen als Schaltelement hat den Vorteil, dass dessen Innenwiderstand als Serienwiderstand zu der oder jeder LC-Serienschaltung wirksam ist und damit für eine Bedämpfung des Systems, nämlich zumindest des jeweiligen Filterzweigs, sorgt. Bei einer besonderen Ausführungsform des Netzfilters ist als Schaltelement in jedem Filterzweig jeweils ein durch die mindestens eine Ansteuerschaltung in Abhängigkeit von der Schaltbedingung ansteuerbarer Relaiskontakte vorgesehen. Die Verwendung eines Relaiskontakts als Schaltelement hat den Vorteil, dass ein Schutz eines solchen Schaltelements gegen Überspannung und dergleichen nicht erforderlich ist und dass es sich bei einem Relaiskontakt als Schaltelement um eine besonders einfache Schaltungskonfiguration handelt.

Optional ist bei dem Netzfilter ein zu dem jeweiligen Schaltelement parallel geschalteter Widerstand vorgesehen. Ein solcher Widerstand parallel zu dem Schaltelement ermöglicht auch bei noch nicht aktiviertem Schaltelement eine Vorladung der Kondensatoren in der oder jeder LC-Serienschaltung, um einen Stromstoß und ein Überschwingen beim Aktivieren des Schaltelements und damit beim Aktivieren des jeweiligen Filterzweigs zu vermeiden oder zumindest zu verringern. Als parallel geschalteter Widerstand kommt ein sogenannter Varistor, also ein spannungsabhängiger Widerstand, in Betracht. Ein in jedem Filterzweig parallel zu einem Transistor als Schaltelement geschalteter Varistor dient zum Schutz des jeweiligen Transistors gegen Überspannung. Alternativ kommt, speziell bei einem Relaiskontakt als Schaltelement, ein Widerstand mit positivem Temperaturkoeffizienten (sogenannter Kaltleiter/ PTC) als zu dem Schaltelement parallel geschalteter Widerstand in Betracht. Diese Widerstände mit positivem Temperaturkoeffizienten halten den Netzfilter im thermischen Gleichgewicht und ein Schutz vor Überspannungen ist für einen Relaiskontakt als Schaltelement nicht erforderlich.

Zum Betrieb einer speziellen Ausführungsform des Netzfilters ist vorgesehen, dass über einen Messwiderstand in jedem Filterzweig durch die mindestens eine Ansteuerschaltung die Phasenströme überwacht werden und die Ansteuerung des jeweiligen Schaltelements, also insbesondere eines Transistors als Schaltelement, bei Erreichen oder Überschreiten eines vorgegebenen oder vorgebbaren Schwellwerts für den jeweiligen Phasenstrom aufgehoben wird. Diese Überwachung der Phasenströme und die Deaktivierung des Schaltelements/Transistors bei Erreichen oder Überschreiten des Schwellwerts bewirkt den Schutz des jeweiligen Schaltelements/Transistors vor Überspannung.

Zum Betrieb einer weiteren Ausführungsform des Netzfilters ist vorgesehen, dass bei Erreichen oder Überschreiten eines vorgegebenen oder vorgebbaren Grenzwerts für eine Temperatur zumindest eines der Widerstände mit positivem Temperaturkoeffizienten die Ansteuerung der Schaltelemente aufgehoben und ein Signalelement angesteuert wird. Die Überwachung eines Grenzwerts für eine Temperatur zumindest eines der Widerstände mit positivem Temperaturkoeffizienten (oder eine Überwachung äquivalenter oder proportionaler elektrischer Größen, also z.B. einer über dem Widerstand mit positivem Temperaturkoeffizienten abfallenden Spannung) vermeidet die Überhitzung der Widerstände mit positivem Temperaturkoeffizienten und ermöglicht bei Aufhebung der Ansteuerung der Schaltelemente, also insbesondere der Relaiskontakte, ein Abkühlen der Widerstände. Wenn auf diese Weise die Ansteuerung der Schaltelemente/Relaiskontakte aufgehoben wird, ist die Filterfunktion nicht mehr gegeben. Um dies einem Benutzer zu signalisieren, ist die Ansteuerung eines Signalelements, also z.B. einer Leuchtdiode oder dergleichen, vorgesehen. Wenn die Widerstände mit positivem Temperaturkoeffizienten wieder abgekühlt sind, was ebenfalls durch die Ansteuerschaltung erfasst werden kann, kann die erneute Aktivierung der Schaltelemente erfolgen und die Filterfunktion ist wiederhergestellt.

Die oben genannte Aufgabe wird auch mit einer Antriebseinheit oder einem sonstigen Automatisierungsgerät mit einem oder für einen Elektromotor gelöst, die bzw. das einen Netzfilter wie hier oder nachfolgend beschrieben umfasst. Der Begriff "Automatisierungsgerät" umfasst sämtliche Geräte, Einrichtungen oder Systeme, also Antriebssteuerungen, Frequenzumrichter und Ähnliches, wie sie zur Steuerung, Regelung und/oder Überwachung technologischer Prozesse z.B. zum Umformen oder Transportieren von Material oder Energie eingesetzt werden oder einsetzbar sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten führen.

Es zeigen
- FIG 1: einen Stromrichter,
- FIG 2: eine erste Ausführungsform eines Netzfilters für einen Umrichter und
- FIG 3: eine weitere Ausführungsform eines Netzfilters für einen Umrichter.

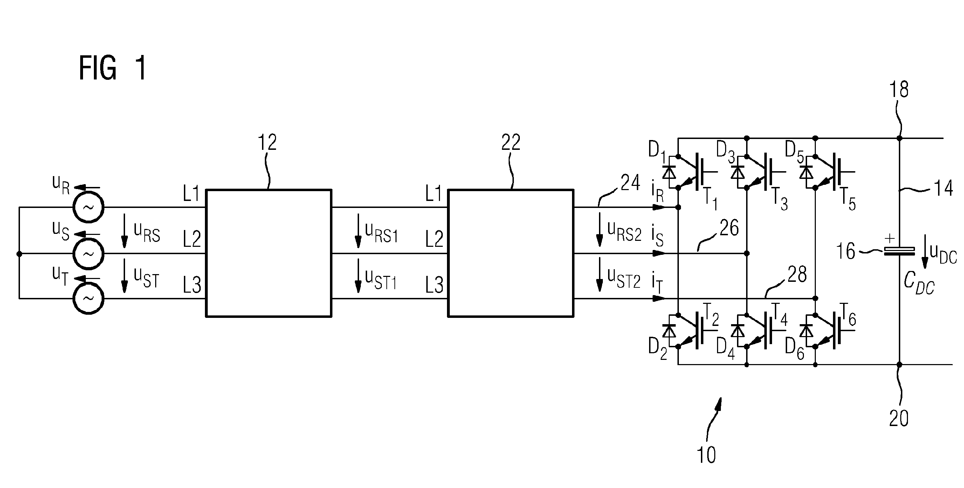

FIG 1 zeigt als Beispiel für einen Umrichter in einem Prinzipschaltbild schematisch vereinfacht den Anschluss und den Aufbau eines Stromrichters 10 an ein Dreiphasennetz 12 (L1, L2, L3), wobei der Stromrichter 10 eine mit steuerbaren Halbleiterschaltern T1, T2, T3, T4, T5, T6 und antiparallelen Dioden D1, D2, D3, D4, D5, D6 bestückte Brückenschaltung, insbesondere in einer Ausführung als IGBT-B6-Brücke, umfasst.

Dem Stromrichter 10 ist an dessen Ausgang ein Zwischenkreis 14 nachgeordnet, der eine Zwischenkreiskapazität 16 (C_{DC}) umfasst, über der im Betrieb eine Zwischenkreisspannung u_{DC} abfällt. Eingangsseitig ist der Stromrichter 10 über einen Filter 22 mit dem Netz 12 verbunden und zwar über netzseitige Stränge 24, 26, 28, nämlich derart, dass jeder Strang 24-28 an einen Mittelabgriff zwischen jeweils einem oberen und einem unteren Halbleiterschalter T1-T6 angeschlossen ist. In jedem Strang 24-28 fließt ein durch die Netzspannungen u_{R}, u_{S}, u_{T} bestimmter Strom i_{R}, i_{S}, i_{T}. Zwischen je zwei Strängen 24-28, deren jeweils eingeprägte elektrische Größe i_{R}, i_{S}, i_{T} auch als Phasenstrom bezeichnet wird, liegen am Eingang des Filters 22 und am Eingang des Stromrichters 10 die Anschlussspannungen u_{RS}, u_{ST} bzw. u_{RS1}, u_{ST1} bzw. u_{RS2}, u_{ST2} an.

Die Ansteuerung der Halbleiterschalter T1-T6 erfolgt mit einer in FIG 1 nicht gezeigten Ansteuerschaltung entsprechend einem Modulationsmodus, der so gewählt ist, dass sich am Ausgang des Stromrichters 10 eine gewünschte Zwischenkreisspannung u_{DC} einstellt.

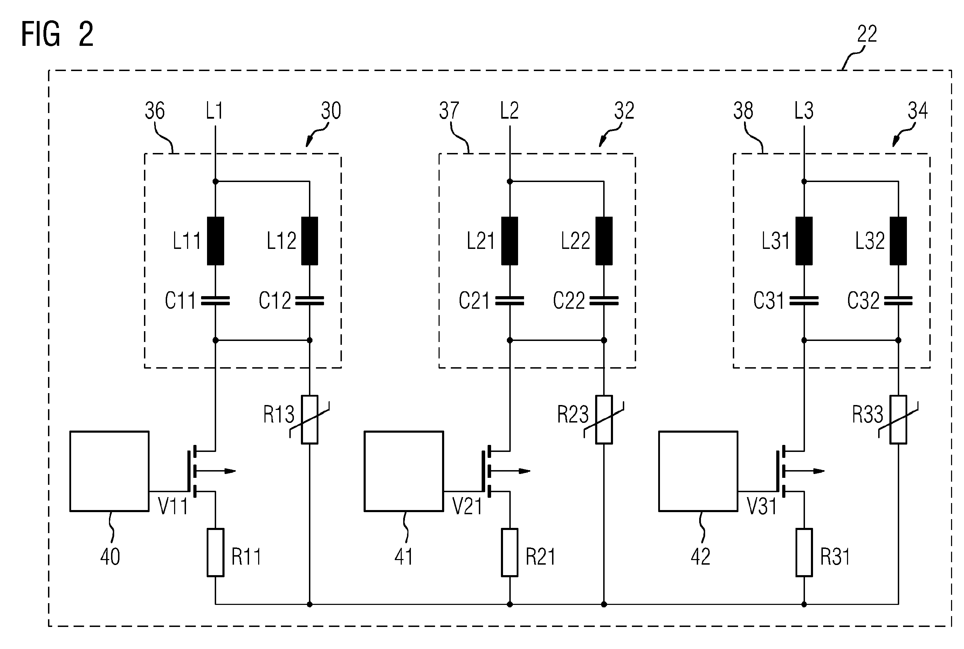

Eine Ausführungsform des Filters 22 ist in FIG 2 dargestellt. Der Filter 22 umfasst einen ersten, zweiten und dritten Filterzweig 30, 32, 34 und in jedem Filterzweig 30-34 jeweils zumindest eine LC-Serienschaltung L11, C11; L21, C21; L31, C31. Jede LC-Serienschaltung wirkt als Filter und über die Auswahl der Drosseln L11, L21, L31 und Kondensatoren C11, C21, C31 wird eine Filterfrequenz f1 (erste Filterfrequenz) festgelegt. Die Filterzweige 30-34 werden im Folgenden mitunter kurz auch nur als Zweig 30-34 bezeichnet. Parallel zu den LC-Serienschaltungen L11, C11; L21, C21; L31, C31 weist jeder Zweig 30-34 zumindest eine weitere LC-Serienschaltung L12, C12; L22, C22; L32, C32 auf. Die LC-Serienschaltung L11, C11; L21, C21; L31, C31 fungiert als Bandsperre und kann für weitere Frequenzen beliebig erweitert werden. Eine einzelne LC-Serienschaltung L11, C11; L21, C21; L31, C31 oder eine Parallelschaltung mehrerer LC-Serienschaltungen wird im Folgenden als LC-Glied 36, 37, 38 bezeichnet.

Bei der in FIG 2 gezeigten Ausführungsform des Filters 22 erfolgt die Aktivierung der Filterfunktion durch Aktivierung der einzelnen Zweige 30-34. Dafür ist in jedem Zweig 30-34 ein elektronischer Schalter, z.B. ein Transistor V11, V21, V31, vorgesehen. Die Transistoren V11, V21, V31, nämlich deren Innenwiderstand R_{DS} (nicht dargestellt; bezeichnet den Widerstand zwischen Kollektor und Emitter bzw. Drain und Source), sorgen für eine Bedämpfung des Systems. Im eingeschalteten Zustand sind die Innenwiderstände der Transistoren V11, V21, V31 als Serienwiderstand zum jeweiligen LC-Glied 36-38 wirksam.

Zum Schutz der Transistoren V11, V21, V31 umfasst jeder Zweig 30-34 jeweils einen Varistor R13, R23, R33, also einen spannungsabhängigen Widerstand. Die Varistoren R13, R23, R33 bewirken einen Schutz der Transistoren V11, V21, V31 gegen Überspannung.

Das Einschalten der Transistoren V11, V21, V31 erfolgt mit einer Ansteuerschaltung 40, 41, 42 und zwar bei einer Kollektor-Emitter Spannung U_{DS} (nicht eingezeichnet) kleiner oder gleich Null (U_{DS} ≤ 0). Über Messwiderstände R11, R21, R31 (sog. Shunts) werden die Phasenströme in jedem Zweig 30-34 erfasst und bei Überschreiten einer vorgegebenen oder vorgebbaren Grenze werden durch die Ansteuerschaltung 40-42 die Transistoren V11, V21, V31 gesperrt. Jede Ansteuerschaltung 40-42 umfasst geeignete Mittel zur Erfassung der Kollektor-Emitter Spannung U_{DS} des jeweils angesteuerten Transistors V11, V21, V31 und zur Erfassung der Phasenströme.

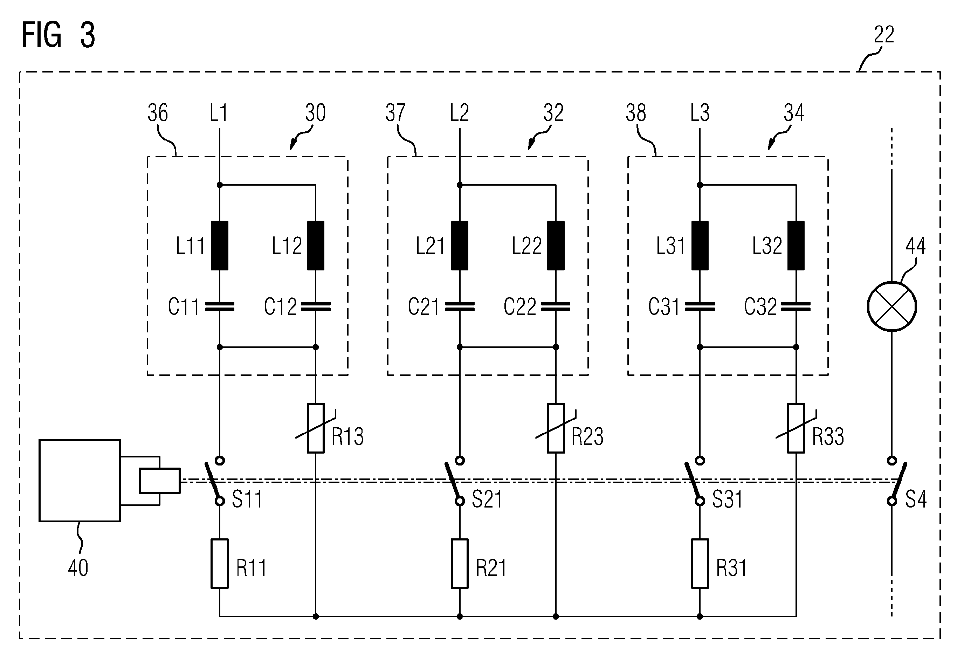

FIG 3 zeigt eine alternative Ausführungsform des in FIG 2 dargestellten Filters 22. Der Unterschied zu der Schaltung in FIG 2 besteht im Wesentlichen in der gemeinsamen Aktivierung aller Zweige des Filters 22 durch eine gemeinsame Ansteuerschaltung 40. Die Ansteuerschaltung 40 steuert einen elektrischen Schalter, hier ein Relais, an und als Schaltelemente fungierende Relaiskontakte S11, S21, S31 in jedem Zweig 30-34 bewirken bei einer Ansteuerung (Bestromung) des Relais die Aktivierung des Filters 22 und die gleichzeitige Aktivierung aller Zweige 30-34.

Die Funktionalität der Schaltung in FIG 3 unterscheidet sich nicht wesentlich von der Funktionalität der Schaltung in FIG 2. Die Rolle der Transistoren V11, V21, V31 (FIG 2) als Dämpfungsglied wird durch die Relaiskontakte S11, S21, S31 und die Messwiderstände R11, R21, R31 übernommen. Ein Überspannungsschutz - wie bei der Schaltung in FIG 2 für die Transistoren V11, V21, V31 - ist nicht mehr erforderlich.

Die Varistoren R13, R23, R33 der Schaltung in FIG 2 können durch Thermistoren (Kaltleiter; PTCs) R13, R23, R33 ersetzt werden. Diese oder an deren Stelle vorgesehene Widerstände ohne temperatur- oder spannungsabhängige Charakteristik besorgen eine Vorladung der Kondensatoren C11, C21, C31, usw., um einen Stromstoß und ein Überschwingen beim Einschalten des Filters 22 zu vermeiden.

Die Ansteuerschaltung 40 aktiviert (bestromt) das Relais unmittelbar nach Anlegen der Spannung. Die Aktivierung des Relais wird nur aufgehoben, wenn einer der Messwiderstände R11, R21, R31 überhitzt. Im normalen Betrieb kann eine solche Situation ausgeschlossen werden, speziell dann, wenn die parallel zu den Messwiderständen R11, R21, R31 geschalteten Widerstände als Kaltleiter oder PCTs R13, R23, R33 ausgeführt sind, die aufgrund ihrer temperaturabhängigen Widerstandscharakteristik (zunehmender Widerstand bei zunehmender Temperatur) das System im thermischen Gleichgewicht halten, denn bei zunehmendem Widerstand einzelner PCTs R13, R23, R33 steigt der wirksame Gesamtwiderstand des betreffenden Zweigs, wodurch der im gleichen Zweig befindliche Messwiderstand R11, R21, R31 wieder abkühlen kann. Damit sinkt dann nachfolgend auch der Widerstand des jeweiligen PCTs R13, R23, R33.

Falls es dennoch zu einer Überhitzung eines der Messwiderstände R11, R21, R31 oder einer der PCTs R13, R23, R33 kommen sollte, wird dies von der Ansteuerschaltung 40 erfasst - die dafür über eine insoweit erforderliche Sensorik/Schaltung verfügt (an sich bekannt; nicht dargestellt) - und durch die Ansteuerschaltung 40 eine Deaktivierung des Relais bewirkt. Mit der Deaktivierung des Relais kann bei einem entsprechenden weiteren Relaiskontakt S4 ein Leuchtmittel 44 oder dergleichen aktiviert werden, um die Ausnahmesituation und die nicht mehr gegebene Filterfunktion anzuzeigen. Sobald der Filter 22 auf diese Weise abgeschaltet ist, kühlen die PCTs R13, R23, R33 ab und die Filterfunktion ist wieder möglich und das Relais kann wieder aktiviert werden.

Einzelne im Vordergrund stehende Aspekte der hier eingereichten Beschreibung lassen sich damit kurz wie folgt zusammenfassen: Angegeben und beschrieben wird ein Netzfilter 22 für einen Umrichter 10, wobei der Netzfilter 22 für jeweils eine Phase des Umrichters 10 jeweils einen Filterzweig 30, 32, 34 mit jeweils zumindest einer LC-Serienschaltung L11, C11; L21, C21; L31, C31 aufweist und zumindest eine Ansteuerschaltung 40, 41, 42 sowie ein durch die mindestens eine Ansteuerschaltung 40, 41, 42 ansteuerbares Schaltelement V11, V21, V31; S11, S21, S31 zur Aktivierung oder Deaktivierung des Filterzweigs 30, 32, 34 in Abhängigkeit von einer durch die Ansteuerschaltung 40, 41, 42 überwachbaren Schaltbedingung umfasst.

## Patentansprüche

1. Netzfilter (22) für einen Umrichter (10), wobei der Netzfilter (22) für jeweils eine Phase des Umrichters (10) jeweils einen Filterzweig (30,32,34) mit jeweils zumindest einer LC-Serienschaltung (L11,C11; L21, C21; L31, C31) aufweist und zumindest eine Ansteuerschaltung (40,41,42) sowie ein durch die mindestens eine Ansteuerschaltung (40,41,42) ansteuerbares Schaltelement (V11, V21, V31; S11, S21, S31) zur Aktivierung oder Deaktivierung des Filterzweigs (30,32,34) in Abhängigkeit von einer durch die Ansteuerschaltung (40, 41, 42) überwachbaren Schaltbedingung umfasst.

2. Netzfilter (22) nach Anspruch 1, mit zumindest einer weiteren LC-Serienschaltung (L12,C12; L22,C22; L32,C32) in jedem Filterzweig (30-34) elektrisch parallel zu der zumindest einen LC-Serienschaltung (L11,C11; L21, C21; L31, C31) des jeweiligen Filterzweigs (30-34).

3. Netzfilter (22) nach Anspruch 1 oder 2, mit einem Messwiderstand (R11, R21, R31) zur Überwachung der Schaltbedingung.

4. Netzfilter (22) nach einem der Ansprüche 1 bis 3, mit jeweils einem durch die mindestens eine Ansteuerschaltung (40, 41, 42) in Abhängigkeit von der Schaltbedingung ansteuerbaren Transistor (V11, V21, V31) als Schaltelement.

5. Netzfilter (22) nach einem der Ansprüche 1 bis 3, mit jeweils einem durch die mindestens eine Ansteuerschaltung (40, 41,42) in Abhängigkeit von der Schaltbedingung ansteuerbaren Relaiskontakt (S11, S21, S31) als Schaltelement.

6. Netzfilter (22) nach einem der vorangehenden Ansprüche, mit einem zu dem Schaltelement (V11, V21, V31; S11, S21, S31) parallel geschalteten Widerstand (R13,R23,R33).

7. Netzfilter (22) nach Anspruch 6, mit einem Varistor (R11, R21, R31) als zu dem Schaltelement (V11, V21, V31; S11, S21, S31) parallel geschaltetem Widerstand.

8. Netzfilter (22) nach Anspruch 6, mit einem Widerstand mit positivem Temperaturkoeffizienten (R11, R21, R31) als zu dem Schaltelement (V11, V21, V31; S11, S21, S31) parallel geschaltetem Widerstand.

9. Verfahren zum Betrieb eines Netzfilters (22) nach einem der Ansprüche 4 bis 8, wobei über einen Messwiderstand (R11, R21, R31) in jedem Filterzweig (30-34) durch die mindestens eine Ansteuerschaltung (40-42) die Phasenströme überwacht werden und die Ansteuerung des Schaltelements (V11, V21, V31; S11, S21, S31) bei Erreichen oder Überschreiten eines vorgegebenen oder vorgebbaren Schwellwerts für den jeweiligen Phasenstrom aufgehoben wird.

10. Verfahren zum Betrieb eines Netzfilters (22) nach Anspruch 5 und Anspruch 8, wobei bei Erreichen oder Überschreiten eines vorgegebenen oder vorgebbaren Grenzwerts für eine Temperatur zumindest eines der Widerstände mit positivem Temperaturkoeffizienten (R11, R21, R31) die Ansteuerung der Schaltelemente (S11, S21, S31) aufgehoben und ein Signalelement (44) angesteuert wird.

11. Automatisierungsgerät mit zumindest einem Netzfilter (22) nach einem der Ansprüche 1 bis 8.
